# EUROPEAN PATENT SPECIFICATION

(11) **EP 2 112 203 B1**
(45) Date of publication and mention of the grant of the patent: **07.09.2011**
(21) Application number: 08159255.2
(22) Date of filing: 27.06.2008
(51) Int. Cl.: C08L 69/00, G02B 5/02

(54) **Extrudable thermoplastic resin compositions for diffusive lighting with textured matte surface**
Extrudierbare thermoplastische Harzzusammensetzungen zur Streuung von Licht mit einer strukturierten matten Fläche
Compositions de résine thermoplastique extrudable pour éclairage diffusif avec surface mate texturée

(30) Priority: 24.04.2008 US 047568 P
(43) Date of publication of application: 28.10.2009
(73) Proprietor: SABIC Innovative Plastics IP B.V., 4612 PX Bergen Op Zoom OH (NL)
(72) Inventor: Mollerus Faber, Rein, 4612 PX Bergen op Zoom (NL); van den Bogerd, Joshua Arie, 4691 JN Tholen (NL)
(74) Representative: Modiano, Micaela Nadia

(56) References cited:
- EP-A- 0 682 083
- DATABASE WPI Week 199522 Thomson Scientific, London, GB; AN 1995-167379 XP002496696 & JP 07 090167 A (TEIJIN LTD) 4 April 1995 (1995-04-04)

## Description

### BACKGROUND OF THE INVENTION

This disclosure relates to polycarbonate compositions, methods of manufacture, and devices making use thereof

Polycarbonates are useful in the manufacture of articles and components for a wide range of applications, from automotive parts to electronic appliances

For diffusive lighting applications, commercially available acrylics (such as Plexiglass Satinice^{®} DF) have been used, which materials can create a 'satin' surface appearance upon processing These acrylics contain spherical light diffuser beads (about 20 micrometers (µm) in size) and combine high diffusivity, high light transmission and a matte textured surface finish

The satin-like surface effect is achieved through extrusion processes, such as pipe, profile and sheet extrusion Parts produced find their application in lighting mainly Acrylics, however, fall short on flammability In countries like the United Kingdom, Italy and France, these materials need to fulfill specific flammability requirements for use in lighting applications

JP 07 090167 A disclose extudable compositions for preparing light-diffusing articles comprising a non-brominated polycarbonate, 1 to 10 wt% of light diffusing crosslinked particles, and a flame retardant.

Thermoplastic resin compositions that can be processed into parts for lighting applications that have the combination of the desired satin-like appearance, high light transmission, high light diffusivity (high haze), ease of processing through conventional extrusion processes, higher impact resistance, and flame retardant properties are desired Although polycarbonate compositions can provide some of these properties, there remains a need in the art for compositions that incorporate all of the desired properties, including flame retardance, without having a detrimental effect on appearance Further there remains a need in the art for compositions that can be shaped further after extrusion while maintaining the desired satin-like surface appearance

### SUMMARY OF THE INVENTION

The above-described and other deficiencies of the art are met by an extrudable composition, and methods for using the extrudable composition to make an article, as well as articles made therefrom

In one embodiment, the extrudable composition, comprises polycarbonate, a brominated polycarbonate, between 1 wt% and 10 wt% of light-diffusing particles comprising crosslinked acrylic polymer, which particles have a mean diameter (as measured along the longest axis), of 15 µm to 60 µm, and a flame retardant, wherein weight percentages are based upon a total weight of the extrudable composition

In one embodiment of a method for producing an article, the extrudable composition is extruded Also included are extruded articles made therefrom

The above described and other features are exemplified by the following detailed description

### DETAILED DESCRIPTION OF THE INVENTION

This disclosure is directed to polycarbonate compositions for light-diffusing articles having a matte textured surface and a transparency higher than 50% A diffusive, matte surface effect can be obtained through the addition of substantially spherical acrylic particles or "beads" to the polycarbonate composition

In one embodiment, an extrudable composition for preparing light-diffusing articles can comprise, a non-brominated polycarbonate (e g , in the form of a powder), a brominated polycarbonate (e g , in the form of a powder), between 1 wt% and 10 wt% of light-diffusing particles comprising crosslinked acrylic polymer, which particles have a mean diameter of 15 µm to 60 µm, and a flame retardant, wherein weight percentages are based upon a total weight of the extrudable composition

The extrudable composition can have a UL94 rating of V0 at 3 0 mm, for which test the extrudable composition is formed into an injection molded article The extrudable composition, when tested in the form of an injection molded article, can have a glow wire flammability temperature of 960°C at 1 6 mm thickness as determined by Test Method IEC 695-2-1 The extrudable composition, when tested in the form of an injection molded article, can have a surface roughness Ra of greater than or equal to 0 9 µm and a roughness peakcount of greater than or equal to 20 cm⁻¹ as determined by Test Method DIN 4776 The surface roughness Ra can be greater than or equal to 0 9 µm when a sheet or film is made from the extrudable composition

This extrudable composition can comprise a sufficient amount of brominated polycarbonate to have a bromine content of 0.05 wt% to 0 45 wt% bromine, with the weight percentage based upon a total weight of the extrudable composition The brominated polycarbonate is a brominated oligomeric bisphenol A polycarbonate The flame retardant can comprise a flame retardant salt The flame retardant salt can be potassium 3-(benzenesulfonyl)benzenesulfonate The flame retardant salt can be present in an amount of 0 01 wt% to 1 wt% The non-brominated polycarbonate comprises a branched polycarbonate The light-diffusing particles can comprise crosslinked poly(methyl methacrylate) crosslinked with a diacrylate crosslinking agent The extrudable composition can comprise 90 wt% to 96 49 wt% of the non-brominated polycarbonate comprising a blend of polycarbonates, comprising linear polycarbonate and branched polycarbonate, and 3 wt% to 7 wt% of the light-diffusing particles comprising crosslinked poly(methyl methacrylate) and the mean diameter of the light-diffusing particles is 16 µm to 24 µm

An extruded article formed from the extrudable composition is capable of exhibiting a light transmission of greater than 50% as determined by ASTM D1003-00, a surface roughness Ra of at least 0 9 µm and a roughness peakcount of greater than 20 cm⁻¹ as determined by Test Method DIN 4776, a multi-axial impact at 23°C of greater than 2,000 N as determined by Test Method ISO 660.3, and a multi-axial impact at -30°C of greater than 2,000 N as determined by Test Method ISO 6603

In one embodiment, a method for producing an article can comprise extruding the extrudable composition discussed above to form an article Extruding the extrudable composition can comprise co-extruding the extrudable composition and another material The article can be a multi-layered article

A lighting device can comprising a light source, and a light-diffusing extruded article disposed in optical communication with the light source, and wherein the light-diffusive article is made from the extrudable composition discussed above

As indicated above, the extrudable composition comprises an extrudable polycarbonate (e g , a non-brominated polycarbonate), brominated polycarbonate; light-diffusing particles in an amount of 1 to 10 weight percent, specifically, greater than 1 weight percent and less than 10 weight percent, or more specifically, 3 to 7 weight percent, which light-diffusing particles comprise crosslinked acrylic polymer (homopolymer or copolymer), which have a mean diameter of 8 µm to 80 µm (micrometers), or, specifically, greater than 8 and less than 80 µm, more specifically, 15 to 60 µm, and still more specifically, 20 to 50 µm, wherein weight percentages are based upon a total weight of the composition The particles are measured along the longest axis of the particles, for example, the major axis of a solid ellipse if not spherical The measurement can be made by transmission electron microscopy (TEM).

In one embodiment, the article is a film, wherein a film is defined as having a thickness of less than 1 mm In order to be extrudable into a film, the polycarbonate in the extrudable composition has a weight average molecular weight (Mw) of 18,000 grams per mole (g/mol) to 50,000 g/mol, specifically, 22,000 g/mol to 40,000 g/mol In another embodiment, the extruded article has a thickness of greater than or equal to 1 mm (e g , a sheet or profile) In order to be extrudable the polycarbonate in the extrudable composition has a weight average molecular weight of 23,000 g/mol to 50,000 g/mol, specifically 24,000 g/mol to 40,000 g/mol Weight average molecular weights are expressed against polycarbonate standards as measured by gel permeation chromatography

The combination of the loading and particle size of the light-diffusing particles can provide more desirable uniformity of matte surface texture An exemplary embodiment comprises light-diffusing particles having a median size of 20 µm at 5 percent by weight loading A light-diffusing article made from the extrudable composition can provide a light transmission of greater than 50 percent

In one embodiment, the extrudable composition, when tested in the form of an injection molded article, can have one or more of the following properties a UL94 rating of V0 at 3 0 millimeters (mm), a glow wire flammability temperature of 960°C at 1 6 mm thickness, as determined by Test Method IEC 695-2-1 An article, when made from extruding the extrudable composition, can have an average surface roughness ("Ra") of greater than or equal to 0 9 µm, specifically greater than I I µms and a roughness peakcount ("RPc") of greater than 20 per centimeter (cm⁻¹), specifically, at least 25 cm⁻¹, more specifically, at least 30 cm⁻¹, as determined by Test Method DIN 4776, and/or a multi-axial impact at 23°C of greater than 2,000 Newtons (N), specifically, greater than 5,000 N, as determined by Test Method ISO 6603, and a multi-axial impact at -30°C of greater than 2,000 N, specifically, greater than 4,000 N, as determined by Test Method ISO 6603

In one embodiment, the composition comprises polycarbonate in an amount of 90 weight percent to 96 49 wt% non-brominated polycarbonate, a sufficient amount of brominated polycarbonate to attain a bromine content of 0 05 wt% to 0 45 wt%, and stabilizers in an amount of 0 04 wt% to 0 09 wt%, wherein weight percentages are based upon a total weight of the composition

The extrudable composition can be extruded into an article in the form of a film, pipe, sheet, or a profile Further, the article can be thermoformed while maintaining the matte surface texture Optionally, the extrudable composition can be extruded into a multi-layered article comprising one or more co-extruded layers of the same or other composition

In another exemplary embodiment, the polycarbonate comprises polycarbonate, such as linear polycarbonate, branched polycarbonate, as well as combinations comprising at least one of the foregoing polycarbonates For example, the polycarbonate can be a blend of two or more polycarbonates such as a linear polycarbonate and a branched polycarbonate, or two linear polycarbonates of different molecular weights It is well known to the person skilled in the art that the molecular weights of the polycarbonates need to be chosen such that the material exhibits sufficient melt strength during extrusion and may depend on the thickness and physical property requirements of the final article

In an exemplary embodiment, the light-diffusing particles are spherically shaped beads Exemplary light-diffusing particles include materials such as poly(styrene), poly(acrylate) (e g , poly(methyl methacrylate)), poly(acrylic acid-styrene) copolymers, poly(C₁₋₈ alkylacrylate-C₁₋₈ alkylmethacrylate) copolymers, and so forth), and combinations comprising at least one of the foregoing Desirably, the light-diffusing particles comprise crosslinked poly(methyl methacrylate) The light-diffusing particles can be poly(methyl methacrylate) crosslinked with a diacrylate crosslinking agent Such beads are commercially available, for example, from Sekisu Plastics Co., Ltd. Such beads, in one embodiment, exhibits a specific gravity of 1 20, a refractive index of 1 49, a heat resistance of 250 to 270°C, and a standard degree of cross-linking The particles can have a particle size distribution in which, for example, with respect to 20 µm particles, not more than 25% of the particles are less than or equal to 12 6 µm in diameter and less than or equal to 75% of the particles are greater than or equal to 21.2 µm

In another embodiment, the extrudable light-diffusing composition, comprises. 90 weight percent to 96 49 wt% polycarbonate, wherein the polycarbonate can comprise a linear polycarbonate and/or a branched polycarbonate, 3 to 7 weight percent of light-diffusing particles comprising crosslinked poly(methyl methacrylate), which have a mean diameter of 15 to 60 µms, 0 05 to 2 5 weight percent of a flame retardant, wherein weight percentages are based upon a total weight of the composition Based on standard testing, an injection molded article made from the extrudable composition can have a light transmission of greater than 50 percent, a UL94 rating of V0 at 3 0 mm, and a glow wire flammability temperature of 960°C at
1 6 mm thickness as determined by Test Method IEC 695-2-1 An extruded article made from the extrudable composition can have a surface roughness Ra of greater than or equal to 0 9 µm, specifically greater than 1 1 µm (µm) and a roughness peakcount ("RPc") of greater than 20 per centimeter (cm⁻¹), specifically, at least 25 cm⁻¹, more specifically, at least 30 cm⁻¹, as determined by Test Method DIN 4776, and/or a multiaxial impact at 23°C of greater than 2,000 N, specifically, greater than 5,000 N, as determined by Test Method ISO 6603, and a multi-axial impact at -30°C of greater than 2,000 N, specifically, greater than 4,000 N, as determined by Test Method ISO 6603

The extrudable composition comprises brominated polycarbonate which can be present in an amount less than or equal to 2 0 wt%, or, specifically, 0 5 wt% to 2 0 wt% brominated polycarbonate, or, more specifically, less than or equal to 1 8 wt% brominated polycarbonate, with the weight percentage based upon a total weight of the extrudable composition In other words, the extrudable composition can comprise sufficient brominated polycarbonate (e g , a brominated oligomeric bisphenol A polycarbonate) to have a bromine content of less than or equal to 0 45 wt%, or, specifically, 0 05 wt% to 0 40 wt% bromine, with the weight percentage based upon a total weight of the extrudable composition

As used herein, the term "polycarbonate" means compositions having repeating structural carbonate units of formula (1). 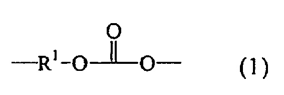 in which at least 60 percent of the total number of R¹ groups contain aromatic moieties and the balance thereof are aliphatic, alicyclic, or aromatic In an embodiment, each R¹ is a C₆₋₃₀ aromatic group, that is, contains at least one aromatic moiety R¹ can be derived from a dihydroxy compound of the formula HO-R¹-OH, in particular of formula (2).

HO-A¹-Y¹-A²-OH (2)

wherein each of A¹ and A² is a monocyclic divalent aromatic group and Y¹ is a single bond or a bridging group having one or more atoms that separate A¹ from A² In an exemplary embodiment, one atom separates A¹ from A² Specifically, each R¹ can be derived from a dihydroxy aromatic compound of formula (3) 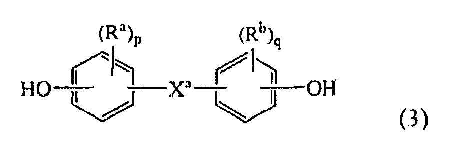 wherein R^{a} and R^{b} each represent a halogen or C₁₋₁₂ alkyl group and can be the same or different, and p and q are each independently integers of 0 to 4 It will be understood that R^{a} is hydrogen when p is 0, and likewise R^{b} is hydrogen when q is 0 Also in formula (3), X^{a} represents a bridging group connecting the two hydroxy-substituted aromatic groups, where the bridging group and the hydroxy substituent of each C₆ arylene group are disposed ortho, meta, or para (specifically para) to each other on the C₆ arylene group In an embodiment, the bridging group X^{a} is single bond, -O-, -S-, - S(O)-, -S(O)₂-, -C(O)-, or a C₁₋₁₈ organic group The C₁₋₁₈ organic bridging group can be cyclic or acyclic, aromatic or non-aromatic, and can further comprise heteroatoms such as halogens, oxygen, nitrogen, sulfur, silicon, or phosphorous The C₁₋₁₈ organic group can be disposed such that the C₆ arylene groups connected thereto are each connected to a common alkylidene carbon or to different carbons of the C₁₋₁₈ organic bridging group In one embodiment, p and q is each 1, and R^{a} and R^{b} are each a C₁₋₃ alkyl group, specifically methyl, disposed meta to the hydroxy group on each arylene group

In an embodiment, X^{a} is a substituted or unsubstituted C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{c})- wherein R^{c} is a divalent C₁₋₁₂ hydrocarbon group Exemplary groups of this type include methylene, cyclohexylmethylene, ethylidene, neopentylidene, and isopropylidene, as well as 2-[221]-bicycloheptylidene, cyclohexylidene, cyclopentylidene, cyclododecylidene, and adamantylidene A specific example wherein X^{a} is a substituted cycloalkylidene is the cyclohexylidene-bridged, alkyl-substituted bisphenol of formula (4) 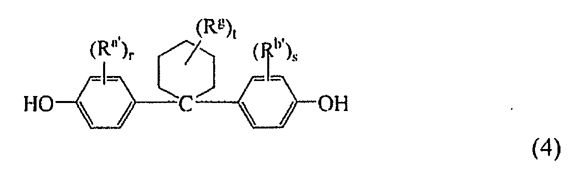 wherein R^{a'} and R^{b'} are each independently C₁₋₁₂ alkyl, R^{g} is C₁₋₁₇ alkyl or halogen, r and s are each independently 1 to 4, and t is 0 to 10 In a specific embodiment, at least one of each of R^{a'} and R^{b'} are disposed meta to the cyclohexylidene bridging group The substituents R^{a'}, R^{b'}, and R^{g} can, when comprising an appropriate number of carbon atoms, be straight chain, cyclic, bicyclic, branched, saturated, or unsaturated In an embodiment, R^{a'} and R^{b'} are each independently C₁₋₄ alkyl, R^{g} is C₁₋₄ alkyl, r and s are each 1, and t is 0 to 5 In another specific embodiment, R^{3'}, R^{b'} and R^{g} are each methyl, r and s are each 1, and t is 0 or 3 The cyclohexylidene-bridged bisphenol can be the reaction product of two moles of o-cresol with one mole of cyclohexanone In another exemplary embodiment, the cyclohexylidene-bridged bisphenol is the reaction product of two moles of a cresol with one mole of a hydrogenated isophorone (e g , 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures

In another embodiment, X^{a} is a C₁₋₁₈ alkylene group, a C₃₋₁₈ cycloalkylene group, a fused C₆₋₁₈ cycloalkylene group, or a group of the formula -B¹-W-B²- wherein B¹ and B² are the same or different C₁₋₆ alkylene group and W is a C₃₋₁₂ cycloalkylidene group or a C₆₋₁₆ arylene group

X^{a} can also be a substituted C₃₋₁₈ cycloalkylidene of formula (5). 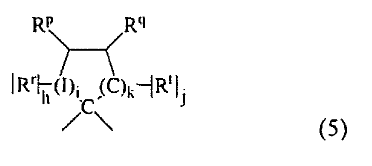 wherein R^{r}, R^{p}, R^{q}, and R^{t} are independently hydrogen, halogen, oxygen, or C₁₋₁₂ organic groups, I is a direct bond, a carbon, or a divalent oxygen, sulfur, or -N(Z)-where Z is hydrogen, halogen, hydroxy, C₁₋₁₂ alkyl,C₁₋₁₂ alkoxy, or C₁₋₁₂ acyl, h is 0 to 2, j is 1 or 2, i is an integer of 0 or 1, and k is an integer of 0 to 3, with the proviso that at least two of R^{r}, R^{p}, R^{q}, and R^{t} taken together are a fused cycloaliphatic, aromatic, or heteroaromatic ring It will be understood that where the fused ring is aromatic, the ring as shown in formula (5) will have an unsaturated carbon-carbon linkage where the ring is fused When k is one and i is 0, the ring as shown in formula (5) contains 4 carbon atoms, when k is 2, the ring as shown in formula (5) contains 5 carbon atoms, and when k is 3, the ring contains 6 carbon atoms In one embodiment, two adjacent groups (e.g., R^{q} and R^{t} taken together) form an aromatic group, and in another embodiment, R^{q} and R^{t} taken together form one aromatic group and R^{r} and R^{p} taken together form a second aromatic group When R^{q} and R^{t} taken together form an aromatic group, R^{p} can be a double-bonded oxygen atom, i e , a ketone

Other useful aromatic dihydroxy compounds of the formula HO-R¹-OH include compounds of formula (6) 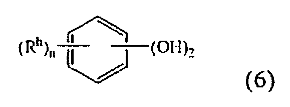 wherein each R^{b} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4 The halogen is usually bromine

Some illustrative examples of specific aromatic dihydroxy compounds include the following 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyc1opentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane,2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like, catechol, hydroquinone, substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC) Combinations comprising at least one of the foregoing dihydroxy compounds can also be used In one specific embodiment, the polycarbonate is a linear homopolymer derived from bisphenol A, in which each of A¹ and A² is p-phenylene and Y¹ is isopropylidene in formula (3)

The polycarbonates can have an intrinsic viscosity, as determined in chloroform at 25°C, of 0.3 to 1 5 deciliters per gram (dl/gm), specifically 0 45 to 1 0 dt/gm The polycarbonates can have a weight average molecular weight of 10,000 to 200,000 Daltons, specifically 20,000 to 100,000 Daltons, as measured by gel permeation chromatography (GPC), using a crosslinked styrene-divinylbenzene column and calibrated to polycarbonate references GPC samples are prepared at a concentration of 1 mg per ml, and are eluted at a flow rate of 1 5 ml per minute

"Polycarbonates" as used herein further include homopolycarbonates, (wherein each R¹ in the polymer is the same), copolymers comprising different R¹ moieties in the carbonate (referred to herein as "copolycarbonates"), copolymers comprising carbonate units and other types of polymer units, such as ester units, and combinations comprising at least one of homopolycarbonates and/or copolycarbonates As used herein, a "combination" is inclusive of blends, mixtures, alloys, reaction products, and the like

A specific type of copolymer is a polyester carbonate, also known as a polyester-polycarbonate Such copolymers further contain, in addition to recurring carbonate chain units of formula (1), repeating units of formula (7). 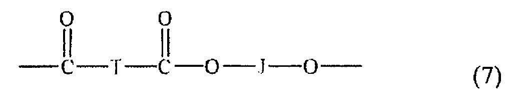 wherein is a divalent group derived from a dihydroxy compound, and can be, for example, a C₂₋₁₀ alkylene group, a C₆₋₂₀ alicyclic group, a C₆₋₂₀ aromatic group or a polyoxyalkylene group in which the alkylene groups contain 2 to 6 carbon atoms, specifically 2, 3, or 4 carbon atoms, and T divalent group derived from a dicarboxylic acid, and can be, for example, a C₂₋₁₀ alkylene group, a C₆₋₂₀ alicyclic group, a C₆₋₂₀ alkyl aromatic group, or a C₆₋₂₀ aromatic group Copolyesters containing a combination of different T and/or J groups can be used The polyesters can be branched or linear

In one embodiment, J is a C₂₋₃₀ alkylene group having a straight chain, branched chain, or cyclic (including polycyclic) structure In another embodiment, J is derived from an aromatic dihydroxy compound of formula (3) above In another embodiment, J is derived from an aromatic dihydroxy compound of formula (4) above In another embodiment, J is derived from an aromatic dihydroxy compound of formula (6) above

Exemplary aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids Acids containing fused rings can also be present, such as in 1,4-, 1,5-, or 2,6-naphthalenedicarboxylic acids Specific dicarboxylic acids include terephthalic acid, isophthalic acid, naphthalene dicarboxylic acid, cyclohexane dicarboxylic acid, or a combination comprising at least one of the foregoing acids A specific dicarboxylic acid comprises a combination of isophthalic acid and terephthalic acid wherein the weight ratio of isoplithalic acid to terephthalic acid is 91.9 to 2.98 In another specific embodiment, J is a C₂₋₆ alkylene group and T is p-phenylene, m-phenylene, naphthalene, a divalent cycloaliphatic group, or a combination thereof This class of polyester includes the poly(alkylene terephthalates)

The molar ratio of ester units to carbonate units in the copolymers can vary broadly, for example 1.99 to 99.1, specifically 10:90 to 90.10, more specifically 25.75 to 75.25, depending on the desired properties of the final composition

In a specific embodiment, the polyester unit of a polyester-polycarbonate is derived from the reaction of a combination of isophthalic and terephthalic diacids (or derivatives thereof) with resorcinol In another specific embodiment, the polyester unit of a polyester-polycarbonate is derived from the reaction of a combination of isophthalic acid and terephthalic acid with bisphenol A In a specific embodiment, the polycarbonate units are derived from bisphenol A In another specific embodiment, the polycarbonate units are derived from resorcinol and bisphenol A in a molar ratio of resorcinol carbonate units to bisphenol A carbonate units of 1.99 to 99.1.

Polycarbonates can be manufactured by processes such as interfacial polymerization and melt polymerization Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor, such as carbonyl chloride, in the presence of a catalyst such as triethylamine and/or a phase transfer catalyst, under controlled pH conditions, e.g, 8 to 12 The most commonly used water immiscible solvents include methylene chloride, 1,2-dichloroethane, chlorobenzene, toluene, and the like

All types of polycarbonate end groups are contemplated as being useful in the polycarbonate composition, provided that such end groups do not significantly adversely affect desired properties of the compositions

Branched polycarbonate blocks can also be used, and they can be prepared by adding a branching agent during polymerization These branching agents include polyfunctional organic compounds containing at least three functional groups selected from hydroxyl, carboxyl, carboxylic anhydride, haloformyl, and mixtures of the foregoing functional groups Specific examples include trimellitic acid, trimellitic anhydride, trimellitic trichloride, tris-p-hydroxy phenyl ethane (THPE), isatin-bisphenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid The branching agents can be added at a level of 0 05 to 2 0 wt% Mixtures comprising linear polycarbonates and branched polycarbonates can be used

A chain stopper (also referred to as a capping agent) can be included during polymerization The chain stopper limits molecular weight growth rate, and so controls molecular weight in the polycarbonate Exemplary chain stoppers include certain mono-phenolic compounds, mono-carboxylic acid chlorides, and/or mono-chloroformates Mono-phenolic chain stoppers are exemplified by monocyclic phenols such as phenol and C₁-C₂₂ alkyl-substituted phenols such as p-cumyl-phenol, resorcinol monobenzoate, and p-and tertiary-butyl phenol, and monoethers of diphenols, such as p-methoxyphenol Alkyl-substituted phenols with branched chain alkyl substituents having 8 to 9 carbon atom can be specifically mentioned Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like

Mono-carboxylic acid chlorides can also be used as chain stoppers These include monocyclic, mono-carboxylic acid chlorides such as benzoyl chloride, C₁-C₂₂ alkyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride, and combinations of monocyclic and polycyclic mono-carboxylic acid chlorides Chlorides of aliphatic monocarboxylic acids with less than or equal to 22 carbon atoms are useful Functionalized chlorides of aliphatic monocarboxylic acids, such as acryloyl chloride and methacryoyl chloride, are also useful Also useful are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Alternatively, melt processes can be used to make the polycarbonates Generally, in the melt polymerization process, polycarbonates can be prepared by coreacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion Volatile monohydric phenol is removed from the molten reactants by distillation and the polymer is isolated as a molten residue. A specifically useful melt process for making polycarbonates uses a diaryl carbonate ester having electron-withdrawing substituents on the aryls Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing esters In addition, useful transesterification catalysts can include phase transfer catalysts of formula (R³)₄Q⁺X, wherein each R³, Q, and X are as defined above Exemplary transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing.

The polyester-polycarbonates can also be prepared by interfacial polymerization Rather than utilizing the dicarboxylic acid or diol per se, the reactive derivatives of the acid or diol, such as the corresponding acid halides, in particular the acid dichlorides and the acid dibromides can be used Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used

The composition can further comprise a polysiloxane-polycarbonate copolymer, also referred to as a polysiloxane-polycarbonate The polydiorganosiloxane (also referred to herein as "polysiloxane") blocks of the copolymer comprise repeating diorganosiloxane units of formula (10). 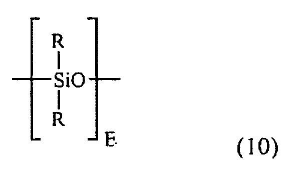 wherein each occurrence of R is independently the same or different C₁₋₁₃ monovalent organic group For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-Cₗ₃ alkylaryl, or C₇-C₁₃ alkylaryloxy The foregoing groups can be fully or partially halogenated with fluorine, chlorine, bromine, or iodine, or a combination thereof In an embodiment, where a transparent polysiloxane-polycarbonate is desired, R is unsubstituted by halogen Combinations of the foregoing R groups can be used in the same copolymer

The value of E in formula (10) can vary widely depending on the type and relative amount of each component in the thermoplastic composition, the desired properties of the composition, and like considerations. Generally, E has an average value of 2 to 1,000, specifically 2 to 500, more specifically 5 to 100 In one embodiment, E has an average value of 10 to 75, and in still another embodiment, E has an average value of 40 to 60 Where E is of a lower value, e g , less than 40, it can be desirable to use a relatively larger amount of the polycarbonate-polysiloxane copolymer Conversely, where E is of a higher value, e g , greater than 40, a relatively lower amount of the polycarbonate-polysiloxane copolymer can be used

A combination of a first and a second (or more) polycarbonate-polysiloxane copolymers can be used, wherein the average value of E of the first copolymer is less than the average value of E of the second copolymer

In one embodiment, the polydiorganosiloxane blocks are provided by repeating structural units of formula (11). 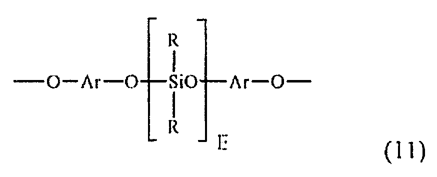 wherein E is as defined above, each R can be the same or different, and is as defined above, and Ar can be the same or different, and is a substituted or unsubstituted C₆-C₃₀ arylene group, wherein the bonds are directly connected to an aromatic moiety Ar groups in formula (11) can be derived from a C₆-C₃₀ dihydroxyarylene compound, for example a dihydroxyarylene compound of formula (3) or (6) above Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane Combinations comprising at least one of the foregoing dihydroxy compounds can also be used

In another embodiment, polydiorganosiloxane blocks comprises units of formula (13). 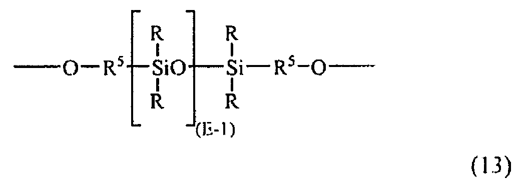 wherein R and E are as described above, and each occurrence of R⁵ is independently a divalent C₁-C₃₀ organic group, and wherein the polymerized polysiloxane unit is the reaction residue of its corresponding dihydroxy compound In a specific embodiment, the polydiorganosiloxane blocks are provided by repeating structural units of formula (14). 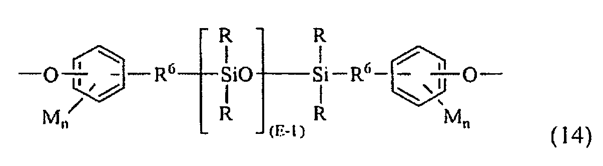 wherein R and E are as defined above R⁶ in formula (14) is a divalent C₂-C₈ aliphatic group Each M in formula (14) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl, R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl In another embodiment, R is methyl, or a combination of methyl and trifluoropropyl, or a combination of methyl and phenyl In still another embodiment, M is methoxy, n is one, R² is a divalent C₁-C₃ aliphatic group, and R is methyl

Units of formula (14) can be derived from the corresponding dihydroxy polydiorganosiloxane (15). 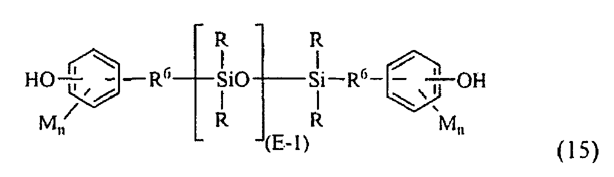 wherein R, E, M, R², and n are as described above Such dihydroxy polysiloxanes can be made by effecting a platinum-catalyzed addition between a siloxane hydride of formula (16). 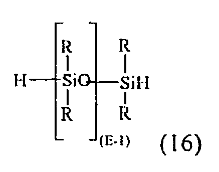 wherein R and E are as previously defined, and an aliphatically unsaturated monohydric phenol Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4, 6-dimethylphenol, 2-allyl-4-bromo-6-methylphenol, 2-allyl-6-methoxy-4-methylphenol and 2-allyl-4, 6-dimethylphenol Combinations comprising at least one of the foregoing can also be used

The polyorganosiloxane-polycarbonate can comprise 50 to 99 weight percent of carbonate units and 1 to 50 weight percent siloxane units Within this range, the polyorganosiloxane-polycarbonate copolymer can comprise 70 to 98 weight percent, more specifically 75 to 97 weight percent of carbonate units and 2 to 30 weight percent, more specifically 3 to 25 weight percent siloxane units

Polyorganosiloxane-polycarbonates can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards

The polyorganosiloxane-polycarbonate can have a melt volume flow rate, measured at 300°C/1 2 kg, of 1 to 50 cubic centimeters per 10 minutes (cc/10 min), specifically 2 to 30 cc/10 min Mixtures of polyorganosiloxane-polycarbonates of different flow properties can be used to achieve the overall desired flow property

The thermoplastic composition can further include an impact modifier that does not adversely affect the desired extrudable composition properties, including light transmission Suitable impact modifiers are typically high molecular weight elastomeric materials derived from olefins, monovinyl aromatic monomers, acrylic and methacrylic acids and their ester derivatives, as well as conjugated dienes The polymers formed from conjugated dienes can be fully or partially hydrogenated The elastomeric materials can be in the form of homopolymers or copolymers, including random, block, radial block, graft, and core-shell copolymers Combinations of impact modifiers can be used

A specific type of impact modifier is an elastomer-modified graft copolymer comprising an elastomeric (i e , rubbery) polymer substrate having a Tg less than 10°C, more specifically less than -10°C, or more specifically -40° to -80°C, and (ii) a rigid polymeric superstrate grafted to the elastomeric polymer substrate Exemplary materials for use as the elastomeric phase include conjugated diene rubbers, for example polybutadiene and polyisoprene, copolymers of a conjugated diene with less than 50 wt% of a copolymerizable monomer, for example a monovinylic compound such as styrene, acrylonitrile, n-butyl acrylate, or ethyl acrylate, olefin rubbers such as ethylene propylene copolymers (EPR) or ethylene-propylene-diene monomer rubbers (EPDM), ethylene-vinyl acetate rubbers, silicone rubbers, elastomeric C₁₋₈ alkyl (meth)acrylates, elastomeric copolymers of C₁₋₈ alkyl (meth)acrylates with butadiene and/or styrene, or combinations comprising at least one of the foregoing elastomers Exemplary materials for use as the rigid phase include monovinyl aromatic monomers, such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN)

Impact modifiers are generally present in amounts of 1 to 30 wt%, based on the total weight of the polymers in the composition

In addition to the polycarbonate (and any impact modifier, if used), the thermoplastic composition can include various additives (e g , filler(s) and/or reinforcing agent(s)) ordinarily incorporated in resin compositions of this type, with the proviso that the additives are selected so as to not significantly adversely affect the desired properties of the extrudable composition, for example, light transmission of greater than 50% Combinations of additives can be used Such additives can be mixed at a suitable time during the mixing of the components for forming the composition

Possible fillers or reinforcing agents include, for example, silicates and silica powders such as aluminum silicate (mullite), synthetic calcium silicate, zirconium silicate, fused silica, crystalline silica graphite, natural silica sand, or the like, boron powders such as boron-nitride powder, boron-silicate powders, or the like, oxides such as TiO₂, aluminum oxide, magnesium oxide, or the like, calcium sulfate (as its anhydride, dihydrate or trihydrate), calcium carbonates such as chalk, limestone, marble, synthetic precipitated calcium carbonates, or the like, talc, including fibrous, modular, needle shaped, lamellar talc, or the like, wollastonite, surface-treated wollastonite, glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like, single crystal fibers or "whiskers" such as silicon carbide, alumina, boron carbide, iron, nickel, copper, or the like, fibers (including continuous and chopped fibers) such as asbestos, carbon fibers, glass fibers, such as E, A, C, ECR, R, S, D, or NE glasses, or the like, sulfides such as molybdenum sulfide, zinc sulfide or the like, barium compounds such as barium titanate, barium ferrite, barium sulfate, heavy spar, or the like, metals and metal oxides such as particulate or fibrous aluminum, bronze, zinc, copper and nickel or the like, flaked fillers such as glass flakes, flaked silicon carbide, aluminum diboride, aluminum flakes, steel flakes or the like, fibrous fillers, for example short inorganic fibers such as those derived from blends comprising at least one of aluminum silicates, aluminum oxides, magnesium oxides, and calcium sulfate hemihydrate or the like, natural fillers and reinforcements, such as wood flour obtained by pulverizing wood, fibrous products such as cellulose, cotton, sisal, jute, starch, cork flour, lignin, ground nut shells, corn, rice grain husks or the like, organic fillers such as polytetrafluoroethylene, reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like, as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents

The fillers and reinforcing agents can be surface treated with silanes to improve adhesion and dispersion with the polymeric matrix resin In addition, the reinforcing fillers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture Exemplary co-woven structures include glass fiber-carbon fiber, carbon fiber-aromatic polyimide (aramid) fiber, and aromatic polyimide fiberglass fiber or the like Fibrous fillers can be supplied in the form of, for example, rovings, woven fibrous reinforcements, such as 0-90 degree fabrics or the like, non-woven fibrous reinforcements such as continuous strand mat, chopped strand mat, tissues, papers and felts or the like, or three-dimensional reinforcements such as braids

Other optional additives include antioxidants, flow aids, mold release compounds, UV absorbers, stabilizers such as light stabilizers and others, lubricants, plasticizers, colorants, including pigments and dyes, anti-static agents, metal deactivators, and combinations comprising one or more of the foregoing additives Such additives are selected so as to not significantly adversely affect the desired properties of the composition

The composition further comprises a flame retardant or a combination of flame retardants As used herein, the term "flame retardant" does not include brominated polycarbonates even though they can contribute to flame retardancy of the composition The flame retardant can be present in an amount less than or equal to 1 wt%, or, specifically, 0.01 wt% to 1 wt%, with the weight percentage based upon a total weight of the extrudable composition

Useful flame retardants include organic compounds that include phosphorus, bromine, and/or chlorine Non-brominated and non-chlorinated phosphorus-containing flame retardants can be preferred in certain applications for regulatory reasons, for example organic phosphates and organic compounds containing phosphorus-nitrogen bonds

One type of exemplary organic phosphate is an aromatic phosphate of the formula (GO)₃P=O, wherein each G is independently an alkyl, cycloalkyl, aryl, alkylaryl, or aralkyl group, provided that at least one G is an aromatic group Two of the G groups can be joined together to provide a cyclic group, for example, diphenyl pentaerythritol diphosphate Exemplary aromatic phosphates include, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl, phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like A specific aromatic phosphate is one in which each G is aromatic, for example, triphenyl phosphate, tricresyl phosphate, isopropylated triphenyl phosphate, and the like

Di- or polyfunctional aromatic phosphorus-containing compounds are also useful, for example, compounds of the formulas below: 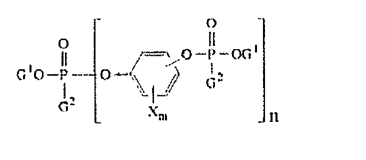 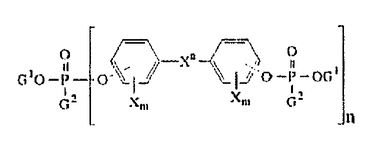 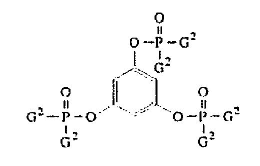 wherein each G¹ is independently a hydrocarbon having 1 to 30 carbon atoms, each G² is independently a hydrocarbon or hydrocarbonoxy having 1 to 30 carbon atoms, each X is independently a bromine or chlorine, m is 0 to 4, and n is 1 to 30 Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol A, respectively, their oligomeric and polymeric counterparts, and the like

Exemplary flame retardants containing phosphorus-nitrogen bonds include phosphonitrilic chloride, phosphorus ester amides, phosphoric acid amides, phosphonic acid amides, phosphinic acid amides, tris(aziridinyl) phosphine oxide

Halogenated materials can also be used as flame retardants, for example halogenated compounds and resins of formula (20). 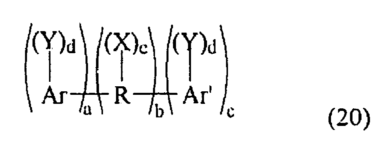 wherein R is an alkylene, alkylidene or cycloaliphatic linkage, e g , methylene, ethylene, propylene, isopropylene, isopropylidene, butylene, isobutylene, amylene, cyclohexylene, cyclopentylidene, or the like, or an oxygen ether, carbonyl, amine, or a sulfur containing linkage, e.g., sulfide, sulfoxide, sulfone, or the like R can also consist of two or more alkylene or alkylidene linkages connected by such groups as aromatic, amino, ether, carbonyl, sulfide, sulfoxide, sulfone, or the like

Ar and Ar' in formula (20) are each independently mono- or polycarbocyclic aromatic groups such as phenylene, biphenylene, terphenylene, naphthylene, or the like.

Y is an organic, inorganic, or organometallic radical, for example (1) halogen, e g , chlorine, bromine, iodine, fluorine or (2) ether groups of the general formula OB, wherein B is a monovalent hydrocarbon group similar to X or (3) monovalent hydrocarbon groups of the type represented by R or (4) other substituents, e g , nitro, cyano, and the like, said substituents being essentially inert provided that there is greater than or equal to one, specifically greater than or equal to two, halogen atoms per aryl nucleus

When present, each X is independently a monovalent hydrocarbon group, for example an alkyl group such as methyl, ethyl, propyl, isopropyl, butyl, decyl, or the like, an aryl groups such as phenyl, naphthyl, biphenyl, xylyl, tolyl, or the like, and aralkyl group such as benzyl, ethylphenyl, or the like, a cycloaliphatic group such as cyclopentyl, cyclohexyl, or the like The monovalent hydrocarbon group can itself contain inert substituents

Each d is independently 1 to a maximum equivalent to the number of replaceable hydrogens substituted on the aromatic rings comprising Ar or Ar' Each e is independently 0 to a maximum equivalent to the number of replaceable hydrogens on R Each a, b, and c is independently a whole number, including 0. When b is not 0, neither a nor c can be 0 Otherwise either a or c, but not both, can be 0 Where b is 0, the aromatic groups are joined by a direct carbon-carbon bond

The hydroxyl and Y substituents on the aromatic groups, Ar and Ar' can be varied in the ortho, meta or para positions on the aromatic rings and the groups can be in any possible geometric relationship with respect to one another.

Included within the scope of the above formula are bisphenols of which the following are representative: 2,2-bis-(3,5-dichlor-ophenyl)-propane, bis-(2-chlorophenyl)-methane, bis(2,6-dibromophenyl)-methane, 1,1-bis-(4-iodophenyl)-ethane, 1,2-bis-(2,6-dichlorophenyl)-ethane, 1,1-bis-(2-chloro-4-iodophenyl)ethane, 1,1-bis-(2-chloro-4-methylphenyl)-ethane, 1, 1-bis-(3,5-dichlorophenyl)-ethane, 2,2-bis-(3-phenyl-4-bromophenyl)-ethane, 2,6-bis-(4,6-dichloronaphthyl)-propane, 2,2-bis-(2,6-dichlorophenyl)-pentane, 2,2-bis-(3,5-dibromophenyl)-hexane, bis-(4-chlorophenyl)-phenyl-methane; bis-(3,5-dichlorophenyl)-cyclohexylmethane; bis-(.3-nitro-4-bromophenyl)-methane, bis-(4-hydroxy-2,6-dichloro-3-methoxyphenyl)-methane, and 2,2-bis-(3,5-dichloro-4-hydroxyphenyl)-propane 2,2 bis-(3-bromo-4-hydroxyphenyl)-propane Also included within the above structural formula are 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like

Also useful are oligomeric and polymeric halogenated aromatic compounds, such as a copolycarbonate of bisphenol A and tetrabromobisphenol A and a carbonate precursor, e g , phosgene Metal synergists, e g , antimony oxide, can also be used with the flame retardant

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate (KSS), sodium toluene sulfonate (NaTs), and the like, salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complex such as Li₃AlF₆, BaSiF₆, KBF₄, K₃AlF₆, KAlF₄, K₂SiF₆, and/or Na₃AlF₆ or the like

Another useful class of flame retardant is the class of cyclic siloxanes having the general formula (R₂SiO)_{y} wherein R is a monovalent hydrocarbon or fluorinated hydrocarbon having from 1 to 18 carbon atoms and y is a number from 3 to 12 Examples of fluorinated hydrocarbon include, but are not limited to, 3-fluoropropyl, 3,3,3-trifluoropropyl, 5,5,5,4,4,3,3-heptafluoropentyl, fluorophenyl, difluorophenyl and trifluorotolyl Examples of suitable cyclic siloxanes include, but are not limited to, octamethylcyclotetrasiloxane, 1,2,3,4-tetramethyl-1,2,3,4-tetravinylcyclotetrasiloxane, 1,2,3,4-tetramethyl-1,2,3,4-tetraphenylcyclotetrasiloxane, octaethylcyclotetrasiloxane, octapropylcyclotetrasiloxane, octabutylcyclotetrasiloxane, decamethylcyclopentasiloxane, dodecamethylcyclohexasiloxane, tetradecamethylcycloheptasiloxane, hexadecamethylcyclooctasiloxane, eicosamethylcyclodecasiloxane, octaphenylcyclotetrasiloxane, and the like A particularly useful cyclic siloxane is octaphenylcyclotetrasiloxane

In an embodiment, the flame retardant is a flame retardant salt, such as KSS When present, the foregoing flame retardant additives are generally present in amounts of 0.01 to 10 wt%, specifically 0 02 to 5 wt%, more specifically 0 05 wt% to 1 wt%, based upon a total weight of the extrudable composition

The extrudable composition can be formed into a film by, for example, extruding the composition used to make the light-diffusing article, by combining the specified ingredients to form an extrudable composition, and extruding the composition to form a light-diffusing article having the properties described herein The method optionally further includes calendaring the extrudable composition employing calendaring rolls

The thermoplastic compositions can be manufactured by various methods For example, polycarbonate (eg, polycarbonate in the form of a powder), light-diffusing particles, flame retardants, and/or other optional components are first blended, optionally with fillers in a HENSCHEL-Mixer^{®} high speed mixer Other low shear processes, including but not limited to hand mixing, can also accomplish this blending The blend is then fed into the throat of a twin-screw extruder via a hopper Alternatively, at least one of the components can be incorporated into the composition by feeding directly into the extruder at the throat and/or downstream through a side-stuffer Additives can also be compounded into a masterbatch with a desired polymeric resin and fed into the extruder The extruder is generally operated at a temperature higher than that necessary to cause the composition to flow The extrudate is immediately quenched in a water batch and pelletized The pellets, so prepared, when cutting the extrudate can be one-fourth inch long or less as desired Such pellets can be used for subsequent molding, shaping, or forming

Transparent compositions can be produced by manipulation of the process used to manufacture the polycarbonate composition One example of such a process to produce transparent polycarbonate compositions is described in U S Patent Application No 2003/0032725

The extrudable composition can be used to form a lighting device, comprising a light source, and a light-diffusing article disposed in optical communication with the light source (e.g, light from the light source can contact the film), and wherein the light-diffusing article comprises the extrudable composition described herein after it has been extruded

The polycarbonate material can have a transmission of 50 to 90%, as measured using 2 65 mm plaques Unless specifically set forth herein otherwise, transmission is measured on 2 65 mm plaques in accordance with ASTM D1003-00, Procedure A using a HAZE-GUARD DUAL from BYK-Gardner

Flammability tests were performed following the procedure of Underwriter's Laboratory Bulletin 94 entitled "Tests for Flammability of Plastic Materials, UL94, revision date July 29, 1997" Several ratings can be applied based on the rate of burning, time to extinguish, ability to resist dripping, and whether or not drips are burning According to this procedure, materials can be classified as HB, V0, UL94 V1, V2, 5VA and/or 5VB on the basis of the test results obtained for five samples The criteria for each of these flammability classifications are described below in Table 1

| Table I | | | |
|---|---|---|---|
| Criterion Conditions | V0 | V1 | V2 |
| After flame time for each specimen t₁ or t₂ | ≤10sec | ≤30 sec | ≤30 sec |
| Total after flame time for any condition set (t₁ plus t₂ for the 5 specimens) | ≤50 sec | ≤250 sec | ≤250 sec |
| Afterflame plus afterglow time For each individual specimen after the second flame application (t₁ + t₃) | ≤30 sec | ≤60 sec | ≤60 sec |
| Afterflame or afterglow of any specimen up to the holding clamp | No | No | No |
| Cotton indicator ignited by flaming particles or drops | No | No | Yes |

Physical measurements were made using the tests and test methods described above

### EXAMPLES

The materials listed in Table 2 below were used in the following compositions and experiments.

| Table 2 | | | | |
|---|---|---|---|---|
| Ingredient | Chemical Name | Cas number | Tradename | Supplier |
| PC-1 | Linear polycarbonate with a weight overage molecular weight Mw = 26.200 g/mol | 25971-63-5 | Lexan® 145 Resm-111 (powder) | SABIC Innovative Plastics |
| PC-2 | Linear polycarbonate with a weight average molecular weight Mw = 30,500 g/mol | 25971-63-5 | Lexan® 105 Resin-111 (powder) | SABIC Innovative Plastics |
| PC-3 | Branched polycarbonate (THPE) with a weight average molecular weight Mw = 39,700 g/mol | 111211-39-3 | Lexan® ML6739-11 IN (powder) | SABIC Innovative Plastics |
| Br-PC | Brominated oligomeric polycarbonate based on tetrabromo bisphenol A with a weight average molecular weight 23,600 g/mol; (comprising 24 wt% bromine in the polycarbonate, based on the total weight of Br-PC) | 156042-31-8 | Lexan® 105B-111N | SABIC Innovative Plastics |
| Tns(di-t-butylphenyl)phosphite | Tris(2,1-ditert-butylphenyl) phosphate | 31570-04-4 | Alkanox® 240 | Chemtura Manufacturing Germany GmbH |
| KSS | potassium 3-(benzenesulfonyl)benzenesulfonate | 63316-43-8 | Potassium Diphenylsulphone Sulphonate (KSS) | Arichem LCC |
| RIMAR Salt | potassium 1.1,2,2,3,3,4,4.4-nonafluorobutane-1-sulfonate | 29420-49-3 | FR-2025® | 3M |
| Octaphenylcyclotetrasil oxane | 2.4,4,6.6,8,8-octaphenyl-1,3,5,7,2,4,6,8-tetraoxatetrasilocane | 546-56-5 | SR476 55G® | Momentive Performance Materials |
| | Diphenylcarbonate diphenyl carbonate | 102-09-0 | Flakes | Lanxess Distribution GmbH |
| UV 360 | 2,2'-Methylenebis(6-(2H-benzotriazol-2-yl)-4-(1,1,3,3-tetramethylbuyl)phenol) | 103597-45-1 | ADK® Stab LA-31RG | Adeka Palmarole |
| PETS | [3-octadecanoyloxy-2,2-bis(octadecanoyloxymethyl)propyl] octadecanoate | 115-93-3 | Loxiol® EP 8578 | Oleochemicals |
| MBX-80 light-diffusing particles (80 m) | methyl 2-methylprop-2-enoate; 2-(2-methylprop-2-enoyloxy)ethyl 2-methylprop-2-enoate (crosslinked PMMA) | 25777-71-3 | Techpolymer® MBX-80 | Sekisui Plastics Co, LtD |
| MBX-50 light-diffusing particles (50 µm) | methyl 2-methylprop-2-enoate; 2-(2-methylprop-2-enoyloxy)ethyl 2-methylprop-2-enoate (crosslinked PMMA) | 25777-71-3 | Techpolymer® MBX-50 | Sekisui Plastics Co, LtD |
| MBX-20 light-diffusing particles (20 µm) | methyl 2-methylprop-2-enoate; 2-(2-methylprop-2-enoyloxy)ethyl 2-methylprop-2-enoate (crosslinked PMMA) | 25777-71-3 | Techpolymer® MBX-20 | Sekisui Plastics Co, LtD |
| MBX-8 light-diffusing particles (8 µm) | methyl 2-methylprop-2-enoate; 2-(2-methylprop-2-enoyloxy)ethyl 2-methylprop-2-enoate (crosslinked PMMA) | 25777-71-3 | Techpolymer® MBX-8 | Sekisui Plastics Co, LtD |

The different compositions as shown in Tables 3 and 4 below were prepared by compounding on a Werner and Pfleider® ZSK 25 mm intermeshing twin screw extruder at 300 revolutions per minute (rpm) and a throughput of 20 kg/hr with a torque of 65% The barrel temperature settings from feed throat towards the direction of the twin strand die were set at 40-150-250-285-300-300-300-300°C. The die temperature was set at 300°C The polymer strand was cooled by a water bath prior to pelletization

Extruded 200 µm films were made through an extrusion process on a 20 mm single screw Dr Collin® Film Extruder at 20 rpm The barrel temperature settings from feed throat towards the direction of the film-die were set at 290-300-310°C The die temperature was set at 305°C The film was air cooled and produced without the use of calendar rolls Screw speed and pulling speed were adjusted to determine the final thickness of the sheet

Extruded solid sheet was made on a Werner and Pfleiderer® ZSK 133 mm twin-screw extruder equipped with 3 roll calendar The sheet was produced with a screw speed of 85 rpm The barrel temperature from feed throat towards the direction of the die was set at 240-250-250-260-260°C The die temperature was set at 255°C All calendar rolls had a temperature of 110°C

For the flammability tests (UL94 Vertical burning test samples and Glow Wire Flammability Temperature samples), injection molded specimen were molded on an Engel 75 Ton injection molding machine (screw diameter 30 mm) The barrel temperature from feed throat towards the direction of the nozzle was 40-280-290-300°C The nozzle temperature was set at 295°C Mold temperature was 90°C and the residence time in the molding machine was approximately 4 to 5 minutes for all samples

Extruded corrugated profiles were produced on a single screw extruder using a temperature profile from 240 to 255°C The calibrator temperatures were 85°C (top) and 55°C (bottom) The profile was processed at 2 meters per minute (m/min) and with a torque of 65%

In one embodiment, when processing the extruded parts, a desired surface appearance (high roughness and high peak count) was obtained when operating at the lowest possible barrel (melt) temperatures, the lowest possible calendar/ roll temperatures, the highest possible distance between the die and calibrator, the lowest possible calendar/calibrator temperatures and the lowest possible vacuum applied on the calibrator Examples I to 15.

Table 3 illustrates the determination, for the light-diffusing particles, of loading and particle size for use in the present polycarbonate formulations in order to obtain desired surface appearance (Ra greater than 0 9 µm) The data shows that the required surface finish was not obtained with a particle size of 8 µm A roughness average number below 0 9 µm was obtained, regardless of the concentration of 8-µm particles in the compositions With a particle size greater than 8 µm (specifically, greater than or equal to 20 µm), an acceptable surface roughness (Ra greater than 0 9 µm) and satin-like appearance was obtained at loadings of approximately 5% by weight

In Table 4 below, the data for thermoplastic resin compositions characterized by FR properties (UL94 V0 and GWFT), Mechanical, Surface and Optical Properties is provided

Table 4 shows flame retardant polycarbonate compositions containing MBX particles with the following unique set of properties The compositions had a high diffusivity in combination with high light transmission (greater than 50%) The extrudable composition can be formed into a sheet having a uniform surface finish closest to Comparative Example I (RPc, Ra, and appearance) With 5% light-diffusing particles having a particle size of 80 µm, a less uniform surface texture was attained; visible in the corrugated profile wherein RPc was less than Comparative Example 1 Table 4 further sets forth a retention of impact properties when adding light-diffusing particles smaller than 80 µm, wherein 80 µm particles gave rise to substantial loss in impact performance With respect to glow wire flammability, at 5% loading of light-diffusing particles and with less than 0.45 wt% bromine addition, a glow flammability temperature of 960°C was attained at a thickness of 1.6 mm. However, this was not attained at 10 wt% loading of light-diffusing particles Finally, 5 wt% loading of light-diffusing particles and with less than 0.45 wt% bromine addition, attained a UL94 flammability rating of V0 at 3 0 mm, while at a 10 wt% loading of light-diffusing particles only a UL94 rating of V1 was attained without brominated polycarbonate

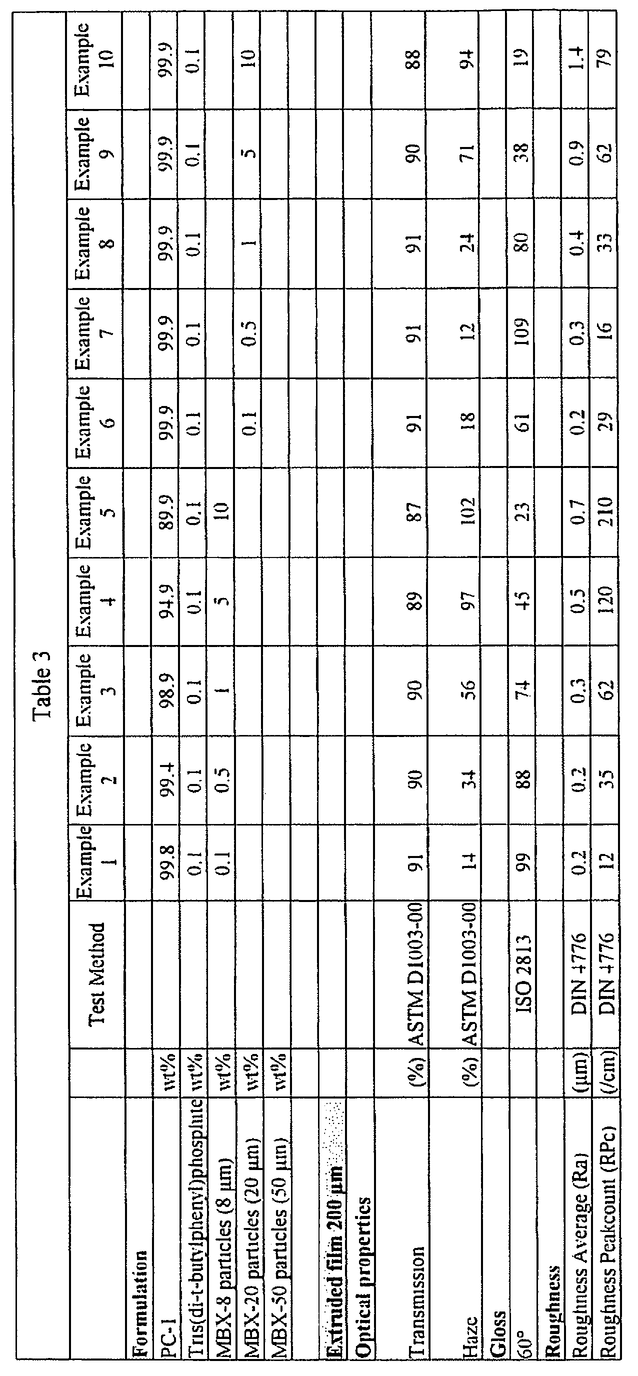

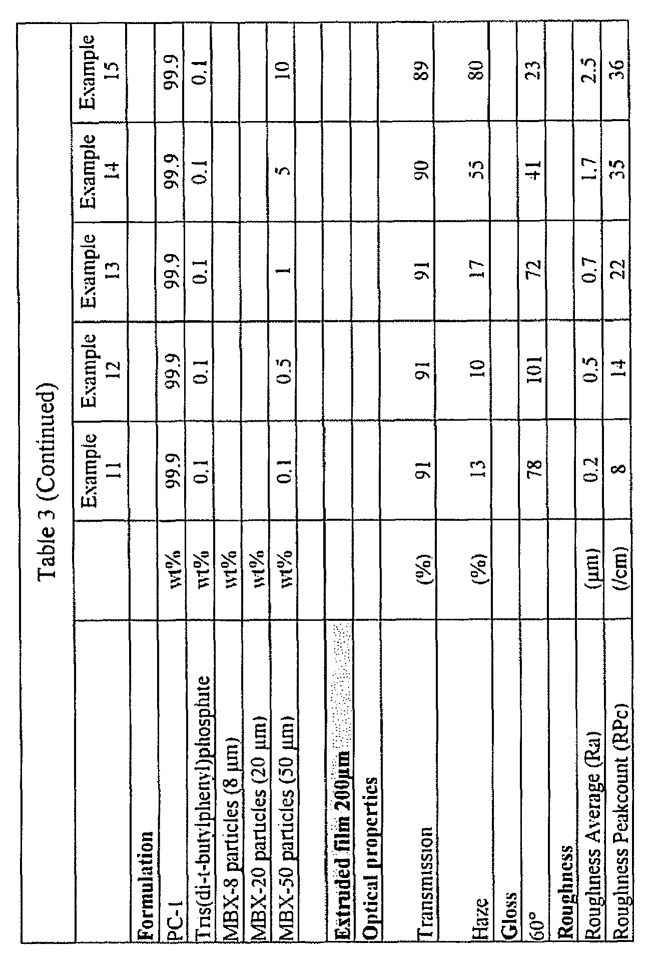

| Table 4 | | | | | | | | | |
|---|---|---|---|---|---|---|---|---|---|
| | Test Method | Unit of Measure | Comparative Example I PC Ref | Comparative Example II 80 µm particles Ref (5%) | Comparative Example III 80 µm particles Ref (10%) | Example 16 | Example 17 | Example 18 | Example 19 |
| **Formulation** | | | | | | | | | |
| PC-2 | | wt% | 44.4 | 42.6 | 37.6 | 42.6 | 42.6 | 32.07 | 18.95 |
| PC-3 | | wt% | 50 | 50 | 50 | 50 | 50 | 50 | 50 |
| Br-PC | | wt% | | 1.5 | 1.5 | 1.5 | 1.5 | 12 | 25 |
| KSS | | wt% | | 0.3 | 0.3 | 0.3 | 0.3 | | 0.3 |
| RIMAR Salt | | wt% | | | | | | 0.08 | |
| Octaphenylcyclotetrasiloxane | | wt% | | | | | | 0.1 | |
| Diphenylcarbonate | | wt% | | | | | | 0.15 | 0.15 |
| Tris(di-t-butyphenyl)phosphate | | wt% | 0.03 | 0.05 | 0.05 | 0.05 | 0.05 | 0.05 | 0.05 |
| UV 360 | | wt% | 0.15 | 0.15 | 0.15 | 0.15 | 0.15 | 0.15 | 0.15 |
| PETS | | wt% | 0.4 | 0.4 | 0.4 | 0.4 | 0.4 | 0.4 | 0.4 |
| MBX-80 | | wt% | 5 | 5 | 10 | | | 5 | 5 |
| MBX-50 | | wt% | | | | 5 | | | |
| MBX-20 | | wt% | | | | | 5 | | |

| **Injection molded Specimen** | | | | | | | | | |
|---|---|---|---|---|---|---|---|---|---|
| UL94 V rating @ 3.0mm | Pass/Fail, V0 or V1 | | Fail | V0 | V1 | V0 | V0 | V0 | V0 |

| **Injection Molded Specimen** | | | | | | | | | |
|---|---|---|---|---|---|---|---|---|---|
| Glow Wire Flammability Temperature | IEC 695-2-1 | | | | | | | | |
| Pass/Fail @ 960°C 1.0 mm | | | Fail | Fail | Fail | Fail | Fail | Fail | Pass |
| Pass/Fail @ 960°C 1.6 mm | | | Fail | Pass | Fail | Pass | Pass | Pass | Pass |
| Pass/Fail @ 960°C 2.0 mm | | | Fail | Pass | Fail | Pass | Pass | Pass | Pass |
| Pass/Fail @ 960°C 3.0 mm | | | Fail | Pass | Pass | Pass | Pass | Pass | Pass |

| **Extruded solid sheet (2.65 mm)** | | | | | | | | | |
|---|---|---|---|---|---|---|---|---|---|
| **Multi-axial Impact @ 23°C** | ISO 6603 | | | | | | | | |
| Maximum Force [N] | | N | 1201 | 5085 | 1620 | 6066 | 7769 | | |
| Stdev | | | 111 | 1149 | 293 | 872 | 86 | | |
| Energy @Max. [J] | | J | 1.7 | 27.7 | 4.9 | 39.6 | 68.2 | | |
| Stdev | | | 0.9 | 11.7 | 1.3 | 13.4 | 1.5 | | |
| Energy @break [J] | | J | 2 | 32.7 | 5.8 | 46.1 | 69.7 | | |
| Stdev | | | 0.9 | 12 | 1.8 | 9.5 | 1.4 | | |
| Deflection @break [mm] | | mm | 3.2 | 11 | 6.2 | 13.2 | 15.9 | | |
| Stdev | | | 1.2 | 1.9 | 1.3 | 1 | 0.3 | | |
| Ductile (%) | | % | 0 | 80 | 20 | 100 | 100 | | |

| **Extruded solid sheet (2.65 mm)** | | | | | | | | | |
|---|---|---|---|---|---|---|---|---|---|
| **Multi-axial Impact @ -30°C** | ISO 6603 | | | | | | | | |
| Maximum Force [N] | | | 1178 | 1852 | 1011 | 4886 | 7460 | | |
| Stdev | | | 176 | 973 | 136 | 2074 | 663 | | |
| Energy @Max.[J] | | | 1.4 | 5.3 | 1.9 | 22 | 48 | | |
| Stdev | | | 0.8 | 2.6 | 0.6 | 16.1 | 12 | | |
| Energy @break [J] | | | 1.6 | 5.7 | 2.2 | 25 | 52 | | |
| Stdev | | | 0.8 | 2.5 | 0.5 | 17.9 | 11 | | |
| Deflection @break [mm] | | | 2.9 | 5.8 | 3.8 | 8.4 | 13 | | |
| Stdev | | | 1.7 | 1.5 | 0.6 | 3.6 | | | |
| Ductile (%) | | | 0 | 0 | 0 | 0 | 100 | | |
| **Diffusion** | DIN 5036 | (CD/m²) | 0.31 | 0.35 | 0.60 | 0.34 | 0.72 | | |
| **Transmission** | ASTM D1003 | | 82.3 | 69.8 | 56.6 | 70.4 | 55.0 | | |
| **Haze (%)** | ASTM D1003 | | 103 | 103 | 104 | 103 | 104 | | |
| **Gloss Flow** | ISO 2813 | | | | | | | | |
| Gloss 20° | | | 2.4 | 6.2 | 1.3 | 7.0 | 8.8 | | |
| Gloss 60° | | | 13.4 | 26.4 | 11.9 | 28.8 | 34.6 | | |
| Gloss 85° | | | 9.5 | 24.5 | 14.4 | 24.0 | 31.9 | | |
| **Surface properties** | | | | | | | | | |
| Roughness Average (Ra) | DIN 4776 | µm | 3.52 | 2.4 | 4.2 | 1.9 | 0.96 | | |
| Roughness Peakcount (RPc) | DIN 4776 | cm⁻¹ | 42 | 42 | 55 | 39 | 59 | | |

| **Extruded corrugated profile (1.5-2.0 mm)** | | | | | | | | | |
|---|---|---|---|---|---|---|---|---|---|
| | | | | | | | | | |
| **Diffusion** | DIN 5036 | (CD/m²) | 0.21 | 0.35 | | 0.36 | 0.61 | | |
| **Transmission (%)** | ASTM D1003 | | 85.9 | 75 | | 75.3 | 64.2 | | |
| **Haze (%)** | ASTM D1003 | | 103 | 104 | | 104 | 104 | | |
| **Gloss Flow** | IS0 2813 | | | | | | | | |
| Gloss 20° | | | 0.8 | 5.5 | | 6.0 | 5.1 | | |
| Gloss 60° | | | 8 | 36 | | 38 | 34 | | |
| Gloss 85° | | | 11 | 41 | | 39 | 34 | | |
| **Surface properties** | | | | | | | | | |
| Roughness Average (Ra) | | µm | 3.07 | 1.27 | | 1.31 | 1.21 | | |
| Roughness Peakcount (RPc) | | cm⁻¹ | 31 | 19 | | 30 | 35 | | |

The extrudable composition disclosed herein can be used in numerous applications such as profiles, tubes, as well as shapes for use in interior and exterior lighting applications, e g luminaries

Ranges disclosed herein are inclusive and combinable (e g , ranges of "up to about 25 wt%, or, more specifically, about 5 wt% to about 20 wt%", is inclusive of the endpoints and all inner values of the ranges of "about 5 wt% to about 25 wt%," etc). "Combination" is inclusive of blends, mixtures, derivatives, alloys, reaction products, and so forth Furthermore, the terms "first," "second," and so forth, herein do not denote any order, quantity, or importance, but rather are used to distinguish one element from another, and the terms "a" and "an" herein do not denote a limitation of quantity, but rather denote the presence of at least one of the referenced item As used herein, the term "(meth)acrylate" encompasses both acrylate and methacrylate groups "Optional" or "optionally" means that the subsequently described event or circumstance can or cannot occur, and that the description includes instances where the event occurs and instances where it does not The modifier "about" used in connection with a quantity is inclusive of the stated value and has the meaning dictated by context, (e g , includes the degree of error associated with measurement of the particular quantity) The suffix "(s)" as used herein is intended to include both the singular and the plural of the term that it modifies, thereby including one or more of that term (e g , the colorant(s) includes one or more colorants) Reference throughout the specification to "one embodiment", "another embodiment", "an embodiment", and so forth, means that a particular element (e g , feature, structure, and/or characteristic) described in connection with the embodiment is included in at least one embodiment described herein, and can or can not be present in other embodiments In addition, it is to be understood that the described elements can be combined in any suitable manner in the various embodiments.

Compounds are described using standard nomenclature For example, any position not substituted by any indicated group is understood to have its valency filled by a bond as indicated, or a hydrogen atom A dash ("-") that is not between two letters or symbols is used to indicate a point of attachment for a substituent For example, -CHO is attached through carbon of the carbonyl group

As used herein, the term "hydrocarbyl" refers broadly to a substituent comprising carbon and hydrogen, optional with at least one heteroatoms, for example, oxygen, nitrogen, halogen, or sulfur, "alkyl" refers to a straight or branched chain monovalent hydrocarbon group; "alkylene" refers to a straight or branched chain divalent hydrocarbon group, "alkylidene" refers to a straight or branched chain divalent hydrocarbon group, with both valences on a single common carbon atom, "alkenyl" refers to a straight or branched chain monovalent hydrocarbon group having at least two carbons joined by a carbon-carbon double bond, "cycloalkyl" refers to a non-aromatic monovalent monocyclic or multicylic hydrocarbon group having at least three carbon atoms, "cycloalkenyl" refers to a non-aromatic cyclic divalent hydrocarbon group having at least three carbon atoms, with at least one degree of unsaturation, "aryl" refers to an aromatic monovalent group containing only carbon in the aromatic ring or rings, "arylene" refers to an aromatic divalent group containing only carbon in the aromatic ring or rings, "alkylaryl" refers to an aryl group that has been substituted with an alkyl group as defined above, with 4-methylphenyl being an exemplary alkylaryl group, "arylalkyl" refers to an alkyl group that has been substituted with an aryl group as defined above, with benzyl being an exemplary arylalkyl group, "acyl" refers to an alkyl group as defined above with the indicated number of carbon atoms attached through a carbonyl carbon bridge (-C(=O)-), "alkoxy" refers to an alkyl group as defined above with the indicated number of carbon atoms attached through an oxygen bridge (-O-), and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound The term "substituted" as used herein means that at least one hydrogen on the designated atom or group is replaced with another group, provided that the designated atom's normal valence is not exceeded When the substituent is oxo (i.e, =O), then two hydrogens on the atom are replaced Combinations of substituents and/or variables are permissible provided that the substitutions do not significantly adversely affect synthesis or use of the compound

Exemplary groups that can be present on a "substituted" position include, but are not limited to, halogen, cyano, hydroxyl, nitro, azido, alkanoyl (such as a C2-C6 alkanoyl group such as acyl or the like), carboxamido, alkyl groups (typically having 1 to 8 carbon atoms, or 1 to 6 carbon atoms), cycloalkyl groups, alkenyl and alkynyl groups (including groups having at least one unsaturated linkages and from 2 to 8, or 2 to 6 carbon atoms), alkoxy groups having at least one oxygen linkages and from 1 to 8, or from 1 to 6 carbon atoms, aryloxy such as phenoxy, alkylthio groups including those having at least one thioether linkages and from 1 to 8 carbon atoms, or from 1 to 6 carbon atoms, alkylsulfinyl groups including those having at least one sulfinyl linkages and from 1 to 8 carbon atoms, or from 1 to 6 carbon atoms, alkylsulfonyl groups including those having at least one sulfonyl linkages and from 1 to 8 carbon atoms, or from 1 to 6 carbon atoms; aminoalkyl groups including groups having at least one N atoms and from 1 to 8, or from 1 to 6 carbon atoms, aryl having 6 or more carbons and at least one rings, (eg , phenyl, biphenyl, naphthyl, or the like, each ring either substituted or unsubstituted aromatic), arylalkyl having 1 to 3 separate or fused rings and from 6 to 18 ring carbon atoms, with benzyl being an exemplary arylalkyl group, or arylalkoxy having 1 to 3 separate or fused rings and from 6 to 18 ring carbon atoms, with benzyloxy being an exemplary arylalkoxy group

All cited patents, patent applications, and other references are incorporated herein by reference in their entirety However, if a term in the present application contradicts or conflicts with a term in the incorporated reference, the term from the present application takes precedence over the conflicting term from the incorporated reference.

While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein

## Claims

1. An extrudable composition, for preparing light-diffusing articles, comprising:
a non-brominated polycarbonate;
a brominated polycarbonate,
between 1 wt% and 10 wt% of light-diffusing particles comprising crosslinked acrylic polymer, which particles have a mean diameter of 15 µm to 60 µm, and
a flame retardant;
wherein weight percentages are based upon a total weight of the extrudable composition

2. The extrudable composition of Claim 1, wherein the extrudable composition has a UL94 rating of V0 at 3 0 mm, for which test the extrudable composition is formed into an injection molded article.

3. The extrudable composition of any of Claims 1 - 2, wherein the extrudable composition, when tested in the form of an injection molded article, has a glow wire flammability temperature of 960°C at 1.6 mm thickness as determined by Test Method IEC 695-2-1.

4. The extrudable composition of any of Claims 1 - 3, wherein the extrudable composition, when tested in the form of an injection molded article, is capable of exhibiting a surface roughness Ra of greater than or equal to 0 9 µm and a roughness peakcount of greater than or equal to 20 cm⁻¹ as determined by Test Method DIN 4776

5. The extrudable composition of any of Claims 1 - 4, comprising a sufficient amount of brominated polycarbonate to have a bromine content of 0 05 wt% to 0 45 wt% bromine, with the weight percentage based upon a total weight of the extrudable composition, and wherein the flame retardant comprises a flame retardant salt

6. The extrudable composition of any of Claims 1 - 5, wherein the brominated polycarbonate is a brominated oligomeric bisphenol A polycarbonate.

7. The extrudable composition any of Claims 1 - 6, wherein the flame retardant comprises a flame retardant salt, and wherein the flame retardant salt is potassium 3-(benzenesulfonyl)benzenesulfonate

8. The extrudable composition of any of Claims 1 - 7, wherein the flame retardant comprises a flame retardant salt, and wherein the flame retardant salt is present in an amount of 0 0 1 wt% to 1 wt%

9. The extrudable composition of any of Claims 1 - 8, wherein the extrudable composition is capable of exhibiting a surface roughness Ra of greater than or equal to 0 9 µm when a sheet or film is made from the extrudable composition

10. The extrudable composition of any of Claims 1 - 9, wherein the non-brominated polycarbonate comprises a branched polycarbonate

11. The extrudable composition of any of Claims 1 - 10, wherein the light-diffusing particles comprises crosslinked poly(methyl methacrylate) crosslinked with a diacrylate crosslinking agent

12. The extrudable composition of any of Claims 1 - 11, comprising
90 wt% to 96.49 wt% of the non-brominated polycarbonate comprising a blend of polycarbonates, comprising linear polycarbonate and branched polycarbonate,
3 wt% to 7 wt% of the light-diffusing particles comprising crosslinked poly(methyl methacrylate) and the mean diameter of the light-diffusing particles is 16 µm to 24 µm,
wherein the weight percentages are based upon a total weight of the composition, and
wherein an extruded article formed from the extrudable composition is capable of exhibiting a light transmission of greater than 50% as determined by ASTM D1003-00, a surface roughness Ra of at least 0 9 µm and a roughness peakcount of greater than 20 cm⁻¹ as determined by Test Method DIN 4776, a multi-axial impact at 23°C of greater than 2,000 N as determined by Test Method ISO 6603, and a multi-axial impact at -30°C of greater than 2,000 N as determined by Test Method ISO 660.3

13. A method for producing an article comprising: extruding the extrudable composition of any of Claims 1 - 12 to form an article.

14. The method of Claim 13, wherein extruding the extrudable composition comprises co-extruding the extrudable composition and another material, and wherein the article is a multi-layered article

15. A lighting device comprising:
a light source, and
a light-diffusing extruded article disposed in optical communication with the light source, and wherein the light-diffusive article is made from the extrudable composition of any of Claims 1 - 12.

## Patentansprüche

1. Eine extrudierbare Zusammensetzung zur Herstellung Licht streuender Artikel, die Folgendes umfasst:
ein nicht bromiertes Polycarbonat,
ein bromiertes Polycarbonat,
zwischen 1 Gewichtsprozent und 10 Gewichtsprozent Licht streuender Partikel, die quervernetztes Acrylpolymer umfassen, wobei die Partikel einen durchschnittlichen Durchmesser von 15µm bis 60 µm haben, und
ein Flammverzögerungsmittel,
worin die Gewichtsprozentsätze auf einem Gesamtgewicht der extrudierbaren Zusammensetzung basieren.

2. Die extrudierbare Zusammensetzung gemäß Anspruch 1, worin die extrudierbare Zusammensetzung eine UL94-Wert von V0 bei 3 0 mm hat, wobei für den Test die extrudierbare Zusammensetzung zu einem spritzgegossenen Artikel geformt wird.

3. Die extrudierbare Zusammensetzung gemäß einem beliebigen der Ansprüche 1-2, worin die extrudierbare Zusammensetzung, wenn sie in Form eines spritzgegossenen Artikels getestet wird, eine Glühdraht-Entzündbarkeitstemperatur von 960°C bei 1 6 mm Dicke hat, wie durch das Testverfahren IEC 695-2-1 bestimmt.

4. Die extrudierbare Zusammensetzung gemäß einem beliebigen der Ansprüche 1-3, worin die extrudierbare Zusammensetzung, wenn sie in Form eines spritzgegossenen Artikels getestet wird, eine Oberflächenrauheit Ra von mehr als oder gleich 0 9 µm und einen Rauheits-Spitzenwert von mehr als oder gleich 20 cm⁻¹ aufweisen kann, wie durch das Testverfahren DIN 4776 bestimmt.

5. Die extrudierbare Zusammensetzung gemäß einem beliebigen der Ansprüche 1-4, die eine ausreichende Menge von bromiertem Polycarbonat umfasst, um einen Bromgehalt von 0 05 Gewichtsprozent bis 0 45 Gewichtsprozent Brom zu haben, wobei der Gewichtsprozentsatz auf einem Gesamtgewicht der extrudierbaren Zusammensetzung basiert und worin das Flammverzögerungsmittel ein flammverzögerndes Salz umfasst.

6. Die extrudierbare Zusammensetzung gemäß einem beliebigen der Ansprüche 1-5, worin das bromierte Polycarbonat ein bromiertes oligomeres Bisphenol A-Polycarbonat ist.

7. Die extrudierbare Zusammensetzung gemäß einem beliebigen der Ansprüche 1-6, worin das Flammverzögerungsmittel ein flammverzögerndes Salz umfasst und worin das flammverzögernde Salz Kalium 3-(benzensulfonyl)benzensulfonat ist.

8. Die extrudierbare Zusammensetzung gemäß einem beliebigen der Ansprüche 1-7, worin der Flammverzögerer ein flammverzögerndes Salz umfasst und worin das flammverzögernde Salz in einer Menge von 0 01 Gewichtsprozent bis 1 Gewichtsprozent vorhanden ist.

9. Die extrudierbare Zusammensetzung gemäß einem beliebigen der Ansprüche 1-8, worin die extrudierbare Zusammensetzung eine Oberflächenrauheit Ra von mehr als oder gleich 0 9 µm aufweisen kann, wenn eine Schicht oder ein Film aus der extrudierbaren Zusammensetzung hergestellt wird.

10. Die extrudierbare Zusammensetzung gemäß einem beliebigen der Ansprüche 1-9, worin das nicht bromierte Polycarbonat ein verzweigtes Polycarbonat umfasst.

11. Die extrudierbare Zusammensetzung gemäß einem beliebigen der Ansprüche 1-10, worin die Licht streuenden Partikel quervernetztes Poly(methylmethacrylat), quervernetzt mit einem Diacrylat-Quervernetzungsmittel, umfassen.

12. Die extrudierbare Zusammensetzung gemäß einem beliebigen der Ansprüche 1-11, die Folgendes umfasst:
90 Gewichtsprozent bis 96,49 Gewichtsprozent des nicht bromierten Polycarbonats, das eine Mischung von Polycarbonaten umfasst, die lineares Polycarbonat und verzweigtes Polycarbonat umfasst,
3 Gewichtsprozent bis 7 Gewichtsprozent der Licht streuenden Partikel, die quervernetztes Poly(methylmethacrylat) umfassen, und der durchschnittliche Durchmesser der Licht streuenden Partikel ist 16 µm bis 24 µm,
worin die Gewichtsprozentsätze auf einem Gesamtgewicht der Zusammensetzung basieren und
worin ein extrudierter Artikel, der aus der extrudierbaren Zusammensetzung geformt ist, Folgendes aufweisen kann: eine Lichtdurchlässigkeit von mehr als 50%, wie ermittelt durch ASTM D1003-00, eine Oberflächenrauheit Ra von mindestens 0 9 µm und einen Rauheit-Spitzenwert von mehr als 20 cm⁻¹ wie bestimmt durch das Testverfahren DIN 4776, einen mehrachsigen Stoß bei 23°C von mehr als 2.000 N wie bestimmt durch das Testverfahren ISO 6603 und einen mehrachsigen Stoß bei -30°C von mehr als 2.000 N wie bestimmt durch das Testverfahren ISO 6603.

13. Ein Verfahren zur Herstellung eines Artikels, das Folgendes umfasst: Extrudieren der extrudierbaren Zusammensetzung gemäß einem beliebigen der Ansprüche 1-12 zum Formen eines Artikels.

14. Das Verfahren gemäß Anspruch 13, worin das Extrudieren der extrudierbaren Zusammensetzung das gemeinsame Extrudieren der extrudierbaren Zusammensetzung und eines anderen Materials umfasst und worin der Artikel ein mehrschichtiger Artikel ist.

15. Eine Beleuchtungsvorrichtung, die Folgendes umfasst:
eine Lichtquelle und
einen Licht streuenden extrudierten Artikel, der in optischer Kommunikation mit der Lichtquelle angeordnet ist und worin der Licht streuende Artikel aus der extrudierbaren Zusammensetzung gemäß einem beliebigen der Ansprüche 1-12 hergestellt ist.

## Revendications

1. Composition extrudable pour la préparation d'articles diffusant la lumière, comprenant:
un polycarbonate non bromé ;
un polycarbonate bromé,
entre 1 % en poids et 10 % en poids de particules diffusant la lumière, comprenant un polymère acrylique réticulé, lesdites particules ayant un diamètre moyen dans la fourchette de 15 µm à 60 µm ; et
un retardateur de flamme ;
dans lequel les pourcentages en poids sont basés sur un poids total de la composition extrudable.

2. Composition extrudable selon la revendication 1, dans laquelle la composition extrudable présente une classification d'inflammabilité UL94 de V0 à 3,0 mm, test pour lequel la composition extrudable est formée en une article moulé par injection.

3. Composition extrudable selon l'une quelconque des revendications 1 à 2, dans laquelle la composition extrudable, lorsqu'elle est testée sous la forme d'un article moulé par injection, présente une température d'inflammabilité au fil incandescent de 960°C sous une épaisseur de 1,6 mm, telle que déterminée par la Test Method IEC 695-2-1.

4. Composition extrudable selon l'une quelconque des revendications 1 à 3, dans laquelle la composition extrudable, lorsqu'elle est testée sous la forme d'un article moulé par injection, est capable de présenter une rugosité de surface Ra supérieure ou égale à 0,9 µm et un pic de rugosité supérieur ou égal à 20 cm⁻¹, tel que déterminé par la Test Method DIN 4776.

5. Composition extrudable selon l'une quelconque des revendications 1 à 4, comprenant une quantité de polycarbonate bromé suffisante pour avoir une teneur en brome de 0,05 % en poids à 0,45 % en poids de brome, avec le pourcentage en poids basé sur un poids total de la composition extrudable, et dans laquelle le retardateur de flamme comprend un sel retardateur de flamme.

6. Composition extrudable selon l'une quelconque des revendications 1 à 5, dans laquelle le polycarbonate bromé est un polycarbonate de bisphénol A oligomère bromé.

7. Composition extrudable selon l'une quelconque des revendications 1 à 6, dans laquelle le retardateur de flamme comprend un sel retardateur de flamme, et dans laquelle le sel retardateur de flamme est du potassium 3-(benzènesulfonyl) benzènesulfonate.

8. Composition extrudable selon l'une quelconque des revendications 1 à 7, dans laquelle retardateur de flamme comprend un sel retardateur de flamme, et dans laquelle le sel retardateur de flamme est présent en une quantité dans la fourchette comprise entre 0,01 % en poids et 1 % en poids.

9. Composition extrudable selon l'une quelconque des revendications 1 à 8, dans laquelle la composition extrudable est capable de présenter une rugosité de surface Ra supérieure ou égale à 0,9 lorsqu'une feuille ou film est faite de la composition extrudable.

10. Composition extrudable selon l'une quelconque des revendications 1 à 9, dans laquelle le polycarbonate non bromé comprend un polycarbonate ramifié.

11. Composition extrudable selon l'une quelconque des revendications 1 à 10, dans laquelle les particules diffusant la lumière comprennent un poly(méthyl méthacrylate) réticulé avec un agent de réticulation diacrylate.

12. Composition extrudable selon l'une quelconque des revendications 1 à 11, comprenant :
de 90 % en poids à 96,49 % en poids du polycarbonate non bromé, comprenant un mélange de polycarbonates, comprenant du polycarbonate linéaire et du polycarbonate ramifié;
de 3 % en poids à 7% en poids des particules diffusant la lumière, comprenant du poly(méthyl méthacrylate) réticulé, et le diamètre moyen des particules diffusant la lumière est dans la fourchette de 16 µm à 24 µm ;
dans laquelle les pourcentages en poids sont basés sur un poids total de la composition ; et
dans lequel un article extrudé, formé à partir de la composition extrudable, est capable de présenter une transmission de la lumière supérieure à 50 %, telle que déterminée par ASTM D1003-00, une rugosité de surface Ra d'au moins 0,9 µm et un pic de rugosité supérieur à 20 cm⁻¹, tel que déterminé par la Test Method DIN 4776, un impact multiaxial à 23°C supérieur à 2,000 N, tel que déterminé par la Test Method ISO 6603, et un impact multiaxial à -30°C supérieur à 2.000 N, tel que déterminé par la Test Method 6603.

13. Procédé de fabrication d'un article comprenant : l'extrusion de la composition extrudable selon l'une quelconque des revendications 1 à 12, pour former un article.

14. Procédé selon la revendication 13, dans lequel l'extrusion de la composition extrudable comprend la co-extrusion de la composition extrudable et d'un autre matériau, et dans lequel l'article est un article multicouche.

15. Dispositif d'éclairage, comprenant :
une source de lumière, et
un article extrudé, diffusant la lumière, placé en communication optique avec la source de lumière, et dans lequel l'article diffusant la lumière est fait de la composition extrudable selon l'une quelconque des revendications 1 à 12.
